# EUROPÄISCHE PATENTSCHRIFT

(11) **EP 1 903 224 B1**
(45) Veröffentlichungstag und Bekanntmachung des Hinweises auf die Patenterteilung: **01.02.2012**
(21) Anmeldenummer: 07450121.4
(22) Anmeldetag: 09.07.2007
(51) Int. Cl.: F16B 25/02

(54) **Schraube zur Befestigung mindestens eines ersten Bauteiles an einem zweiten Bauteil**
Screw for fixing at least a first element to a second element
Vis destiné à la fixation d'au moins une première pièce à une deuxième pièce

(30) Priorität: 22.09.2006 AT 15842006
(43) Veröffentlichungstag der Anmeldung: 26.03.2008
(73) Patentinhaber: Schmid Schrauben Hainfeld Gesellschaft m.b.H., 3170 Hainfeld (AT)
(72) Erfinder: Pinczker, Erich, Ing., 3170 Hainfeld (AT)
(74) Vertreter: Hehenberger, Reinhard

(56) Entgegenhaltungen:
- AU-A- 2 726 377
- DE-A1- 2 800 620
- US-A- 4 534 690

## Beschreibung

Die gegenständliche Erfindung betrifft eine Schraube zur Befestigung mindestens eines ersten Bauteiles an einem zweiten Bauteil, welcher aus Holz od.dgl. hergestellt ist, bestehend aus einem aus Metall, insbesondere aus gewalztem Stahl, hergestellten Schraubenbolzen, welcher an einem seiner beiden Enden mit einem Schraubenkopf und an seinem anderen Ende mit einer Schraubenspitze ausgebildet ist und welcher über zumindest den an die Schraubenspitze anliegenden Teil seiner Länge mit einem Schraubengewinde versehen ist, wobei die Schraubenspitze mit einer Ausnehmung ausgebildet ist, welche sich bis in den an die kegelförmige Schraubenspitze anliegenden Teil des Schraubenbolzens erstreckt und welche durch eine zur Achse des Schraubenbolzens zumindest angenähert parallele Fläche begrenzt ist und wobei durch die Seitenkanten der Fläche Schneidkanten gebildet sind.

Gattungsgemäße Schrauben sind aus der DE 28 00 620 A1 und der AU 27263 77 A bekannt.

Bekannte Schrauben sind an ihrem einen Ende mit einem Schraubenkopf und an ihrem anderen Ende mit einer kegeligen Schraubenspitze ausgebildet, wobei die kegelige Schraubenspitze und der Schraubenbolzen mit einem Gewinde ausgebildet sind. Die Wirkungsweise einer derartigen Schraube besteht darin, dass sie in den zweiten Bauteil aus relativ weichem Material, z.B. Holz, eindreht wird, welcher mit einer Bohrung versehen sein kann, wobei sie durch deren Verdrehung in das Material eingeschraubt wird. Hierbei muss das im Verlauf der Verschraubung befindliche Material des zweiten Bauteiles verdrängt werden. Je größer dabei die spezifische Härte dieses Materials ist, desto größer ist der Widerstand, welcher beim Verdrehen der Schraube auftritt. Zudem kann hierdurch der zweite Bauteil gesprengt werden.

Aus der AT-B 407778 ist eine Schraube bekannt, welche an ihrer kegeligen Schraubenspitze mit einer Ausnehmung ausgebildet ist, welche einerseits durch eine zur Schraubenachse parallele Fläche und andererseits durch eine in einer Normalebene auf die Schraubenachse liegenden Fläche begrenzt ist, wobei sich die in einer Normalebene befindliche Fläche in demjenigen Bereich der kegeligen Schraubenspitze befindet, in welchem diese in den zylindrischen Schraubenbolzen übergeht. Anders ausgedrückt ist dabei die gesamte Schraubenspitze angenähert halbkegelförmig ausgebildet.

Durch diese Ausbildung der Schraubenspitze ist einerseits eine Schneidkante gebildet, durch welche beim Eindrehen der Schraube in einen zweiten Bauteil Material abgetragen wird, wodurch die Gefahr, dass dieser Bauteil gesprengt wird, herabgesetzt wird, wobei das abgetragene Material von der Ausnehmung aufgenommen wird.

Diese bekannte Schraube entspricht jedoch deshalb nicht den bestehenden Erfordernissen, da die quer zur Schraubenachse liegende Fläche in einer Normalebene auf die Schraubenachse liegt, weswegen bei der Verdrehung der Schraube das abgetragene Material aus dieser Ausnehmung nicht austreten kann.

Aus der DE 1400853C ist weiters eine Schraube bekannt, welche gleichfalls mit einer halbkegeligen Schraubenspitze ausgebildet ist, wobei eine quer zur Schraubenachse verlaufende Begrenzungsfläche zur Normalebene auf die Schraubenachse einen Winkel von etwa 45° aufweist. Bei dieser bekannten Schraube endet jedoch diese Begrenzungsfläche noch im Bereich der kegeligen Schraubenspitze bzw. außerhalb des zylindrischen Schraubenbolzens, weswegen durch diese bekannte Schraube den technischen Erfordernissen deshalb nicht entsprochen ist, da das sich in der Ausnehmung ansammelnde Material aus dieser nicht hinausgelangen kann.

Der gegenständlichen Erfindung liegt somit die Aufgabe zugrunde, eine Schraube zu schaffen, durch welche den technischen Erfordernissen optimal entsprochen ist.

Dies wird erfindungsgemäß dadurch erzielt, dass weiters die Ausnehmung bezüglich der Projektion auf die parallel zur Achse liegende Fläche durch eine mit einer Normalebene auf die Achse des Schraubenbolzens einen spitzen Winkel einschließende ebene oder gewölbte Fläche begrenzt ist und dass die Fläche durchgehend in oder durchgehend entgegen der Richtung des Schraubengewindes geneigt ist.

Vorzugsweise ist die mit einer Normalebene auf die Achse des Schraubenbolzens einen spitzen Winkel einschließende Fläche in gleicher Richtung wie das Schraubengewinde geneigt. Alternativ dazu kann die mit einer Normalebene auf die Achse des Schraubenbolzens einen spitzen Winkel einschließende Fläche entgegen der Richtung des Schraubengewindes geneigt sein.
Vorzugsweise schließt die ebene bzw. gewölbte Fläche mit einer Normalebene auf die Achse des Schraubenbolzens einen Winkel zwischen 5° und 45° ein.

Der Gegenstand der Erfindung ist nachstehend anhand von in der Zeichnung dargestellten Ausführungsbeispielen näher erläutert. Es zeigen:
- Fig.1 und 1a: eine erfindungsgemäße Schraube, in einer ersten Seitenansicht sowie in einer Draufsicht, und
- Fig.2 bis 2e: unterschiedliche Ausführungsformen von Schraubenspitzen, in der Draufsicht gemäß Fig. 1a sowie in einem gegenüber dieser vergrößerten Maßstab.

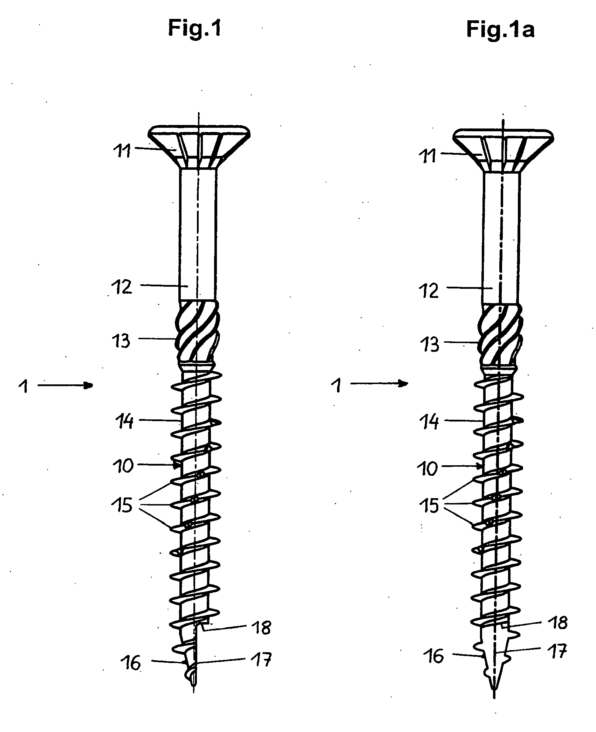

Die in den Fig.1 und 1a dargestellte Schraube 1 weist einen Schraubenbolzen 10 mit einem Schraubenkopf 11, einem daran anschließenden, ohne Schraubengewinde ausgebildeten Bolzenteil 12, einem daran anschließenden mit einer Reibfläche 13 ausgebildeten Bolzenteil, einem daran anschließenden mit einem Schraubengewinde 15 ausgebildeten Bolzenteil 14 sowie mit einer sich kegelig verjüngende Schraubenspitze 16 auf.
Die Schraubenspitze 16 ist mit einer ebenen Fläche 17 ausgebildet, welche angenähert in der Achse der Schraube 1 verläuft, welche sich über das Ende der kegeligen Schraubenspitze 16, d.h. bis über den Beginn des zylindrischen Bolzenteiles 14 hin, erstreckt und welche durch eine zu einer Normalebene auf die Achse des Schraubenbolzens 10 geneigt liegende Fläche 18 begrenzt ist. Durch die Seitenkanten der Fläche 17 werden Schneidkanten gebildet.

Durch die Flächen 17 und 18 ist die eine kegelige Hüllfläche aufweisende Schraubenspitze 16 mit einer sich über bis zu 180° erstreckenden, halbkegeligen Ausnehmung ausgebildet, in welcher sich beim Verdrehen der Schraube 1 Material ansammeln kann. Da hierdurch das Material nicht durch die Schraubenspitze 16 verdrängt werden muss, vermindert sich der Widerstand beim Eindrehen der Schraube 1 bzw. wird die Gefahr, dass ein Sprengen desjenigen Bauteiles, in welchen die Schraube eingeschraubt wird, verursacht wird, vermindert. Da weiters die Fläche 18 mit einer Normalebene auf die Achse des Schraubenbolzens 10 einen spitzen Winkel zwischen 5° und 45° einschließt, kann beim Eindrehen der Schraube 1 in einen Bauteil das sich in der durch die Flächen 17 und 18 gebildeten Ausnehmung ansammelnde Material aus dieser Ausnehmung hinaustreten, wodurch ein Materialstau, durch welchen der Bauteil ebenfalls gesprengt werden könnte, vermieden wird.

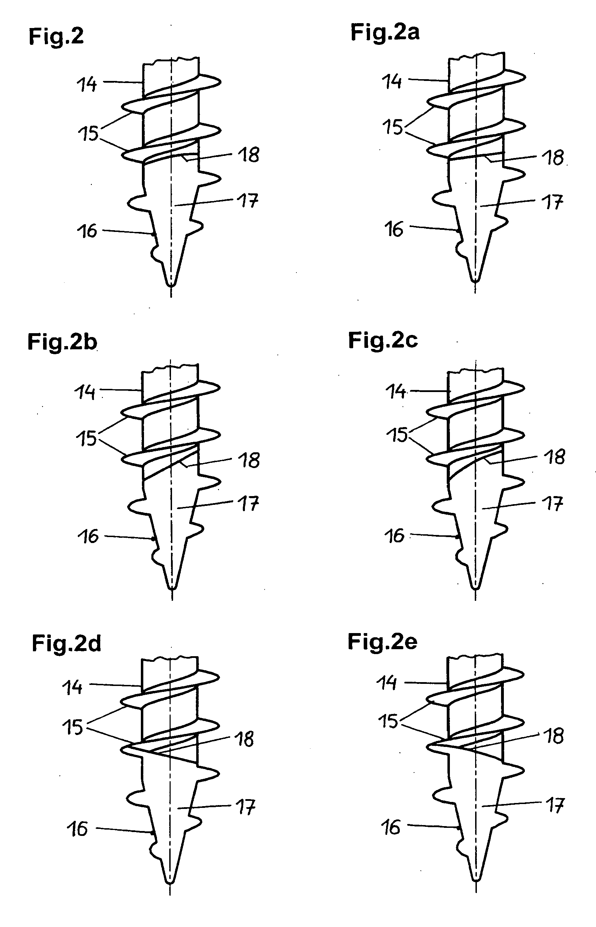

Wie dies aus den Fig.2 bis 2e ersichtlich ist, kann die Fläche 18 eben oder gewölbt ausgebildet sein. Zudem kann sie in unterschiedlichen Neigungen zur Normalebene auf die Schraubenachse verlaufen. Weiters kann sie in der Richtung des Schraubengewindes 15 oder entgegen dieser Richtung verlaufen.

## Patentansprüche

1. Schraube (1) zur Befestigung mindestens eines ersten Bauteiles an einem zweiten Bauteil, welcher aus Holz od.dgl. hergestellt ist, bestehend aus einem aus Metall, insbesondere aus gewalztem Stahl, hergestellten Schraubenbolzen (10), welcher an einem seiner beiden Enden mit einem Schraubenkopf (11) und an seinem anderen Ende mit einer Schraubenspitze (16) ausgebildet ist und welcher über zumindest den an die Schraubenspitze (16) anliegenden Teil seiner Länge mit einem Schraubengewinde (15) versehen ist, wobei an der Schraubenspitze (16) eine Ausnehmung vorgesehen ist, welche sich bis zu dem an die kegelförmige Schraubenspitze (16) anliegenden Teil des Schraubenbolzens (10) erstreckt und welche durch eine zur Achse des Schraubenbolzen (10) zumindest angenähert parallele Fläche (17) begrenzt ist und wobei durch die Seitenkanten der Fläche (17) Schneidkanten gebildet sind, **dadurch gekennzeichnet, dass** weiters die Ausnehmung bezüglich der Projektion auf die parallel zur Achse liegende Fläche (17) durch eine mit einer Normalebene auf die Achse des Schraubenbolzens (10) einen spitzen Winkel einschließende ebene Fläche (18) begrenzt ist und dass die Fläche (18) durchgehend in oder durchgehend entgegen der Richtung des Schraubengewindes (15) geneigt ist.

2. Schraube (1) zur Befestigung mindestens eines ersten Bauteiles an einem zweiten Bauteil, welcher aus Holz od.dgl. hergestellt ist, bestehend aus einem aus Metall, insbesondere aus gewalztem Stahl, hergestellten Schraubenbolzen (10), welcher an einem seiner beiden Enden mit einem Schraubenkopf (11) und an seinem anderen Ende mit einer Schraubenspitze (16) ausgebildet ist und welcher über zumindest den an die Schraubenspitze (16) anliegenden Teil seiner Länge mit einem Schraubengewinde (15) versehen ist, wobei an der Schraubenspitze (16) eine Ausnehmung vorgesehen ist, welche sich bis zu dem an die kegelförmige Schraubenspitze (16) anliegenden Teil des Schraubenbolzens (10) erstreckt und welche durch eine zur Achse des Schraubenbolzen (10) zumindest angenähert parallele Fläche (17) begrenzt ist und wobei durch die Seitenkanten der Fläche (17) Schneidkanten gebildet sind, **dadurch gekennzeichnet, dass** weiters die Ausnehmung bezüglich der Projektion auf die parallel zur Achse liegende Fläche (17) durch eine mit einer Normalebene auf die Achse des Schraubenbolzens (10) einen spitzen Winkel einschließende gewölbte Fläche (18) begrenzt ist und dass die Fläche (18) durchgehend in oder durchgehend entgegen der Richtung des Schraubengewindes (15) geneigt ist.

3. Schraube (1) nach Patentanspruch 1 oder 2, **dadurch gekennzeichnet**, das die ebene bzw. gewölbte Fläche (18) mit einer Normalebene auf die Achse des Schraubenbolzens (10) einen Winkel zwischen 5° und 45° einschließt.

## Claims

1. A screw (1) for fastening at least a first component to a second component which is made of wood or the like, consisting of a stud-bolt (10) made of a metal, in particular rolled steel, which has a screw head (11) on one of its two ends and has a screw tip (16) on its other end and which is provided with a screw thread (15) extending at least over the portion of its length adjacent to the screw tip (16), wherein on the screw tip (16), a recess is provided which extends up to the portion of the stud-bolt (10) adjacent to the conical screw tip (16) and which is delimited by a surface (17) which is at least approximately parallel to the axis of the stud-bolt (10), and wherein cutting edges are formed by the lateral edges of the surface (17), **characterized in that**, furthermore, the recess is delimited with respect to the projection onto the surface (17) arranged parallel to the axis by a plane surface (18) which encloses an acute angle with a normal plane to the axis of the stud-bolt (10), and that the surface (18) is continuously inclined in the direction of the screw thread (15) or continuously inclined in the opposite direction thereof.

2. A screw (1) for fastening at least a first component to a second component which is made of wood or the like, consisting of a stud-bolt (10) made of a metal, in particular rolled steel, which has a screw head (11) on one of its two ends and has a screw tip (16) on its other end and which is provided with a screw thread (15) extending at least over the portion of its length adjacent to the screw tip (16), wherein on the screw tip (16), a recess is provided which extends up to the portion of the stud-bolt (10) adjacent to the conical screw tip (16) and which is delimited by a surface (17) which is at least approximately parallel to the axis of the stud-bolt (10), and wherein cutting edges are formed by the lateral edges of the surface (17), **characterized in that**, furthermore, the recess is delimited with respect to the projection onto the surface (17) arranged parallel to the axis by a curved surface (18) which encloses an acute angle with a normal plane to the axis of the stud-bolt (10), and that the surface (18) is continuously inclined in the direction of the screw thread (15) or continuously inclined in the opposite direction thereof.

3. The screw (1) according to patent claim 1 or patent claim 2, **characterized in that** the plane or curved surface (18) respectively encloses an angle between 5° and 45° with a normal plane to the axis of the stud-bolt (10).

## Revendications

1. Vis (1) pour la fixation d'au moins un premier composant sur un second composant, lequel est fabriqué en bois ou similaire, comprenant un boulon fileté (10) fabriqué à base de métal, en particulier à base d'acier laminé, qui est conçu sur l'une de ses deux extrémités avec une tête de vis (11) et sur son autre extrémité avec une pointe de vis (16) et qui est doté d'un filetage de vis (15) sur au moins la partie de sa longueur contiguë à la pointe de vis (16), un évidement étant prévu sur la pointe de vis (16), qui s'étend jusqu'à la partie, contiguë à la pointe de vis (16) de forme conique, du boulon fileté (10) et qui est délimité par une surface (17) parallèle au moins approximativement à l'axe du boulon fileté (10) et des arêtes de coupe étant formées par les arêtes latérales de la surface (17), **caractérisée en ce qu'**également l'évidement est délimité par rapport à la projection sur la surface (17) parallèle à l'axe par une surface (18) plane formant un angle aigu avec un plan normal par rapport à l'axe du boulon fileté (10) et **en ce que** la surface (18) est inclinée de façon continue dans le sens ou contrairement au sens du filetage de vis (15).

2. Vis (1) pour la fixation d'au moins un premier composant sur un second composant, lequel est fabriqué en bois ou similaire, comprenant un boulon fileté (10) fabriqué à base de métal, en particulier à base d'acier laminé, qui est conçu sur l'une de ses deux extrémités avec une tête de vis (11) et sur son autre extrémité avec une pointe de vis (16) et qui est doté d'un filetage de vis (15) sur au moins la partie, contiguë à la pointe de vis (16), de sa longueur, un évidement étant prévu sur la pointe de vis (16), lequel s'étend jusqu'à la partie, contiguë à la pointe de vis (16) de forme conique, du boulon fileté (10) et qui est délimité par une surface (17) parallèle au moins approximativement à l'axe du boulon fileté (10) et des arêtes de coupe étant formées par les arêtes latérales de la surface (17), **caractérisée en ce qu'**également l'évidement est délimité par rapport à la projection à la surface (17) parallèle à l'axe par une surface (18) incurvée, formant un angle aigu avec un plan vertical par rapport à l'axe du boulon fileté (10), et **en ce que** la surface (18) est inclinée de façon continue dans le sens ou contrairement au sens du filetage de vis (15).

3. Vis (1) selon la revendication 1 ou 2, **caractérisée en ce que** la surface (18) plane ou incurvée forme un angle compris entre 5° et 45° avec un plan vertical par rapport à l'axe du boulon fileté (10).
